# EUROPÄISCHE PATENTSCHRIFT

(11) **EP 3 962 785 B1**
(45) Veröffentlichungstag und Bekanntmachung des Hinweises auf die Patenterteilung: **01.04.2026**
(21) Anmeldenummer: 20734515.8
(22) Anmeldetag: 23.06.2020
(51) Int. Cl.: B60R 25/24, B60R 25/10

(54) **ELEKTRONISCHES TÜRSCHLIESSSYSTEM**
ELECTRONIC DOOR LOCKING SYSTEM
SYSTÈME ÉLECTRONIQUE DE FERMETURE DE PORTIÈRES

(30) Priorität: 26.06.2019 DE 102019209240
(43) Veröffentlichungstag der Anmeldung: 09.03.2022
(73) Patentinhaber: VOLKSWAGEN AKTIENGESELLSCHAFT, 38440 Wolfsburg (DE)
(72) Erfinder: WAGENER, Martin, 38122 Braunschweig (DE); BRÜCKNER, Claus-Peter, 38104 Braunschweig (DE)
(86) Internationale Anmeldenummer: PCT/EP2020/067437
(87) Internationale Veröffentlichungsnummer: WO 2020/260243

(56) Entgegenhaltungen:
- DE-A1- 19 530 721
- DE-A1- 4 329 697
- DE-U1- 9 419 346

## Beschreibung

Die Erfindung betrifft ein elektronisches Türschließsystem.

Bei Kraftfahrzeugen werden die Türen häufig mit einer Zentralverriegelung ausgestattet, wobei die Schlösser der Türen zur Steigerung des Komforts mittels eines elektronischen Schlüssels über Infrarot- oder HF-Strahlung fernbedienbar sein können. Meistens ist die Kraftfahrzeugtür mit einem zusätzlichen mechanischen Schloss versehen, das mittels eines zugehörigen mechanischen Schlüssels betätigbar ist, falls der elektronische Schlüssel ausfällt. Dieser Ausfall kann sowohl durch eine leere Bordnetzbatterie als auch durch eine leere Batterie innerhalb des elektronischen Schlüssels erfolgen. Dabei kann die Bordnetzbatterie zur Versorgung eines Türsteuergeräts mit einer Empfangseinrichtung für das Sendesignal des elektronischen Schlüssels dienen, um nachfolgend die Zentralverriegelung in Gang zu setzen. Die zusätzliche Batterie innerhalb des elektronischen Schlüssels dient zur Ausstrahlung der Sendeleistung des Schlüssels.

Sofern eine dieser Batterien bei den bekannten Systemen ausfällt, muss die Kfz-Tür mit dem zusätzlichen mechanischen Schlüssel betätigt werden.

Zur Erhöhung des Diebstahlschutzes werden im Kraftfahrzeug zunehmend elektronische Mittel eingesetzt, die beispielsweise auch elektronische Schließsysteme für die Türen und das Zündschlüsselsystem umfassen. Beispielsweise ist aus der DE 34 36 761 A1 ein Schließsystem für ein Kraftfahrzeug bekannt, welches einen elektronischen Betriebsschlüssel mit einem zugehörigen Zündschlosssystem umfasst, wobei kodierte Betriebssignale ausgetauscht werden. Dieser Betriebsschlüssel kann gleichzeitig zur Öffnung der Kraftfahrzeugtüren als auch zur Inbetriebsetzung des Kraftfahrzeugs verwendet werden. Auch hier benötigt der Betriebsschlüssel zu seiner Funktion eine eigene Energiequelle, die nach einer gewissen Gebrauchsdauer erschöpft ist, so dass ein zusätzlicher mechanischer Schlüssel erforderlich ist, um zumindest die Kraftfahrzeugtüren zu öffnen.

Zur Lösung des technischen Problems, einen Zugang zum Kraftfahrzeug bei entladener Bordnetzbatterie ohne mechanischen Schlüssel zu gewährleisten, offenbart die gattungsgemäße DE 44 04 501 A1, dass ein Notbetrieb insbesondere bei ausfallender Bordbatterie des Kraftfahrzeuges dadurch eingerichtet werden kann, indem gemäß ersten Vorschlag eine externe Steckdose außerhalb des Fahrzeuges angebracht ist, über die das Bordnetz von außen problemlos mit Energie versorgt werden kann, so dass das elektronische Türsteuergerät zur Betätigung der Zentralverriegelung in Gang gesetzt werden kann. Hierdurch kann auch bei völligem Ausfall der Bordbatterie zumindest eine Betätigung der Türschließanlage erfolgen, so dass die Kraftfahrzeugtüren einschließlich Motorhaube oder Kofferrumdeckel betätigt werden können. Durch diese Maßnahmen kann auf ein zusätzliches mechanisches Schloss vollkommen verzichtet werden, so dass einfache, herkömmliche elektronische Schlüssel verwendbar sind.

In alternativer Ausbildung weist die Kfz-Elektronik eine Spannungsüberwachung auf, welche bei schadhafter Bordbatterie auf eine innerhalb des Kraftfahrzeugs angeordnete Notbatterie umschaltet, um die notwendige Energie zur Betätigung des Türsteuergerätes und insbesondere der Zentralverriegelung zu liefern. Neben den zusätzlichen Kosten ist dabei nachteilig, dass es bei längeren Standzeiten zu einer Selbstentladung der Notbatterie kommen kann

Nachteilig ist, dass die Zuleitung von der externen Steckdose auf den gesamten Bordnetzstrom ausgelegt werden muss.

Aus der DE 10 2015 213 984 A1 ist ein Verfahren zum Bereitstellen von elektrischer Energie für eine Verriegelungssteuerung einer Türvorrichtung bekannt, wobei elektrische Energie aus einer Bewegung eines Türbetätigungselements erzeugt wird, wobei die elektrische Energie in einem Energiespeicher gespeichert wird und anschließend der Verriegelungssteuerung zugeführt wird.

Aus der DE 100 49 321 A1 ist eine Vorrichtung zur externen Stromeinspeisung in ein Kraftfahrzeug zur Stromversorgung von elektrischen Verbrauchern bekannt, die intern an einen Stromspeicher eines Kraftfahrzeug-Bordnetzes angeschlossen sind, wobei in dem Kraftfahrzeug eine induktive Empfangseinrichtung angeordnet ist, die mit zumindest einem Verbraucher im Kraftfahrzeug verbunden ist und in die außen induktiv elektrischer Strom einkoppelbar ist. Vorzugsweise ist dabei die Empfangseinrichtung an die Steuereinheit eines elektronischen Fahrzeug-Zugangsberechtigungssystems angeschlossen. Nachteilig ist der schlechtere Wirkungsgrad sowie das geeignete externe Spannungsquellen nicht allgemein verfügbar sind.

Aus der nachveröffentlichten DE 10 2018 212 407 B3 ist ein elektrisches Türschließsystem bekannt, umfassend mindestens einen Empfänger für die Sendesignale eines elektronischen Schlüssels, mindestens ein Steuergerät zur mechanischen Ver- und Entriegelung mindestens einer Kraftfahrzeugtür, mindestens ein von außerhalb des Kraftfahrzeugs zugängliches Kontaktelement zum Anschließen einer externen Spannungsquelle und mindestens ein Schaltelement. Im Kraftfahrzeug ist eine Steuereinheit für das Schaltelement vorgesehen, die mit dem Kontaktelement und einer Bordnetzbatterie verbunden ist, wobei die Steuereinheit derart ausgebildet ist, in Abhängigkeit der Spannungslage an dem Kontaktelement und der Bordnetzbatterie das Schaltelement in eine erste Schaltstellung oder eine zweite Schaltstellung zu schalten. In der ersten Schaltstellung ist das Kontaktelement von dem elektrischen Bordnetz entkoppelt. In der zweiten Schaltstellung werden mindestens die für die Ver- und Entriegelung notwendigen elektrischen Bordnetzverbraucher mit dem Kontaktelement verbunden und von der Bordnetzbatterie entkoppelt. Vorzugsweise ist das elektronische Türschließsystem derart ausgebildet, dass nur die für die Ver- und Entriegelung notwendigen elektrischen Bordnetzverbraucher in der zweiten Schaltstellung mit dem Kontaktelement verbunden werden.

Aus der DE 195 30 721 A1 ist ein elektronisches Türschließsystem eines Kraftfahrzeugs bekannt, umfassend mindestens einen Empfänger für die Sendesignale eines elektronischen Schlüssels, ein Steuergerät zur elektromechanischen Ver- und Entriegelung mindestens einer Kraftfahrzeugtür, wobei das Steuergerät zur elektromechanischen Ver- und Entriegelung einer Kraftfahrzeugtür einen Notbestromungs-Algorithmus aufweist, wobei das elektronische Türschließsystem derart ausgebildet ist, von einer im Notbestromungs-Modus aktivierten Komponente mindestens eine Funktion zu deaktivieren, die in einem Normal-Modus verfügbar ist.

Aus der DE 94 19 346 U1 ist ein Kraftfahrzeug mit einem Verbrennungsmotor als Antrieb und einem von einer Batterie gespeisten elektrischen Anlasser, sowie einer mit der Batterie gegebenenfalls über einen Schalter verbundenen Steckvorrichtung zum Anschluss eines Kabels bekannt, wobei die Verbindung zwischen der Batterie und der Steckvorrichtung zur Übertragung eines für den Betrieb des Anlassers ausreichenden Stromes ausgebildet ist, wobei die Steckvorrichtung von außen zugänglich ist.

Der Erfindung liegt das technische Problem zugrunde ein elektronisches Türschließsystem mit von außerhalb des Kraftfahrzeuges zugänglichen Kontaktelementen zum Anschließen einer externen Spannungsquelle zu verbessern.

Die Lösung des technischen Problems ergibt sich durch ein elektronisches Türschließsystem mit den Merkmalen des Anspruchs 1. Weitere vorteilhafte Ausgestaltungen der Erfindung ergeben sich aus den Unteransprüchen.

Hierzu umfasst das elektronische Türschließsystem eines Kraftfahrzeuges mindestens einen Empfänger für Sendesignale eines elektronischen Schlüssels, mindestens ein Steuergerät zur mechanischen Ver- und Entriegelung mindestens einer Kraftfahrzeugtür und/oder mindestens ein weiteres Steuergerät und mindestens ein von außerhalb des Kraftfahrzeuges zugängliches Kontaktelement zum Anschließen einer externen Spannungsquelle, wobei das mindestens eine Steuergerät zur elektromechanischen Ver- und Entriegelung mindestens einer Kraftfahrzeugtür und/oder das mindestens eine weitere Steuergerät einen Notbestromungs-Algorithmus aufweist, wobei das elektronische Türschließsystem derart ausgebildet ist, einen Notbestromungs-Modus zu erfassen und den Notbestromungs-Algorithmus zu aktivieren. Dabei ist der Notbestromungs-Algorithmus derart ausgebildet, dann mindestens eine Funktion eines Normal-Modus zu deaktivieren und/oder bei mindestens einer auf vorab definierte Daten von deaktivierten Komponenten zuzugreifen oder die Daten der deaktivierten Komponenten bei der Durchführung einer Funktion zu ignorieren. Hierdurch kann der notwendige Strombedarf für den Notbestromungs-Modus erheblich reduziert werden, sodass beispielsweise notwendige Leitungsquerschnitte entsprechend reduziert werden können. So können zunächst Komponenten (Aktoren, Sensoren, Steuergeräte etc.), die für die Notentriegelung nicht benötigt werden, deaktiviert werden. Ergänzend können aber auch einzelne Funktionen einer Komponente deaktiviert werden, die im Notbestromungs-Modus aktiviert ist. Wird beispielsweise eine Komponente für die Entriegelung benötigt (z. B. das Steuergerät für die Ver- und Entriegelung), so kann diese aktiviert werden, aber hierzu nicht notwendige Funktionen wie beispielsweise die elektrische Fensterheberfunktion deaktiviert werden, was Energie einspart. Hierzu sind dann keine hardwareseitigen Änderungen am Steuergerät oder deren Beschaltung notwendig. Durch das Zugreifen auf vorab definierte Daten können Komponenten deaktiviert werden, von denen im Normal-Modus Daten benötigt werden, die aber nicht zwingend für die Notentriegelung sind.

Alternativ kann die Funktion im Notbestromungs-Modus derart ausgebildet sein, dass auf die Daten der deaktivierten Komponente (z. B. Getriebesteuergerät) verzichtet werden kann.

Der Notbestromungs- Algorithmus kann dabei als spezieller Software-Modus aufgefasst werden.

Weiter weist das elektrische Türschließsystem mindestens ein Schaltelement und eine Steuereinheit auf, die mit dem Kontaktelement und einer Bordnetzbatterie verbunden ist, wobei die Steuereinheit derart ausgebildet ist, in Abhängigkeit der Spannungslage an dem Kontaktelement und der Bordnetzbatterie das Schaltelement in eine erste Schaltstellung oder eine zweite Schaltstellung zu schalten, wobei in der ersten Schaltstellung das Kontaktelement von dem elektrischen Bordnetz des Kraftfahrzeuges entkoppelt ist und in der zweiten Schaltstellung mindestens die für die Ver- und Entriegelung notwendigen elektrischen Bordnetzverbraucher mit dem Kontaktelement verbunden und von der Bordnetzbatterie entkoppelt werden. Dies erhöht die Sicherheit, da eine Umschaltung auf das Kontaktelement nur in Abhängigkeit einer Spannungslage an der Bordnetzbatterie möglich ist, also wenn deren Spannung einen Schwellwert unterschreitet. Somit wird verhindert, dass bei ausreichend geladener Bordnetzbatterie das Kontaktelement für Manipulationen benutzt werden kann, beispielsweise eine unberechtigte Energieentnahme oder das Verursachen eines vorsätzlichen Kurzschlusses.

In einer Ausführungsform ist das elektrische Türschließsystem derart ausgebildet, eine Spannung an dem mindestens einen Kontaktelement zu erfassen und ein Aktivierungssignal für den Notbestromungs-Modus zu erzeugen. Sind mehrere Kontaktelemente vorhanden, so können die Signale logisch beispielsweise durch eine Und- oder Oder-Verknüpfung zusammengefasst werden.

In einer weiteren Ausführungsform ist mindestens ein Steuergerät derart ausgebildet, anhand einer Buskommunikation auf einen Notbestromungs-Modus zu schließen und den mindestens einen Notbestromungs-Algorithmus zu aktivieren. Dabei werden beispielsweise nur die benötigten Steuergeräte mit separaten Leitungen mit dem mindestens einen Kontaktelement verbunden. Bei der Kommunikation stellt dann das mindestens eine Steuergerät fest, dass nur bestimmte Steuergeräte vorhanden sind, sodass auf den Notbestromungs-Modus geschlossen werden kann.

Weiter vorzugsweise ist das Kontaktelement als Steckdose ausgebildet. Alternativ ist das Kontaktelement als Leitungsende oder Kontaktstift derart ausgebildet, dass einfach über ein Starthilfekabel eine elektrische Verbindung hergestellt werden kann.

Weiter vorzugsweise ist die deaktivierte Funktion eine elektrische Fensterheber-Funktion.

In einer weiteren Ausführungsform ist die deaktivierte Komponente, deren vordefinierte Daten verwendet werden, zum Beispiel ein Getriebesteuergerät. Wird beispielsweise für die Verriegelungs-Funktion im Normal-Modus ein Wählhebelstellungssignal benötigt, so kann ein solcher Wert für den Notbestromungs-Modus fest vorgegeben sein bzw. entbehrlich sein, sodass das Fahrzeug verriegelt werden kann (nachdem es zuvor entriegelt wurde), ohne dass das Getriebesteuergerät aktiviert wurde.

Dabei ist in einer Ausführungsform das elektrische Türschließsystem derart ausgebildet, dass nur für die Ver- und Entriegelung notwendige elektrische Bordnetzverbraucher in der zweiten Schaltstellung mit dem Kontaktelement verbunden werden. Dies reduziert ebenfalls Manipulationsmöglichkeiten, wobei zusätzlich der benötigte Strom von der externen Spannungsquelle auf ein Minimum beschränkt wird.

In einer alternativen Ausführungsform werden zusätzlich noch die Bordnetzverbraucher einer elektronischen Parkbremse mit dem Kontaktelement verbunden, sodass nach dem Zutritt zum Kraftfahrzeug die elektronische Parkbremse gelöst werden kann, um das Kraftfahrzeug abzuschleppen, insbesondere wenn keine geeignete externe Spannungsquelle zum Aufladen der Bordnetzbatterie vorhanden ist oder die Bordnetzbatterie defekt ist.

In einer Ausführungsform ist die Steuereinheit derart ausgebildet, eine für das Bordnetz ungeeignete Spannungslage zu blocken oder zu transformieren. Beispielsweise kann vorgesehen sein, dass die Steuereinheit Spannungsbegrenzer wie beispielweise Zenerdioden aufweist. Auch kann die Steuereinheit Hochsetz- oder Tiefsetzsteller aufweisen oder Umrichter. Alternativ kann vorgesehen sein, dass bei einer unpassenden Spannungslage (z. B. einer zu hohen Gleichspannung) das Schaltelement nicht in die zweite Schaltstellung geschaltet wird.

In einer weiteren Ausführungsform ist die Steuereinheit mit weiteren Schutzvorrichtungen wie beispielsweise Filtern ausgebildet, um die Einkoppelung von Störsignalen zu verhindern. Alternativ oder ergänzend können auch reversible oder irreversible Stromsicherungen vorgesehen sein.

In einer weiteren Ausführungsform ist das mindestens eine Schaltelement als Relais ausgebildet, sodass eine galvanische Trennung in den jeweiligen Schaltstellungen errichtet wird.

In einer weiteren Ausführungsform ist die Steuereinheit derart ausgebildet, nach einer vorgegebenen Zeit von der zweiten Schaltstellung in die erste Schaltstellung zurückzuschalten. Auch dies erhöht die Sicherheit gegen Manipulationsversuche.

In einer weiteren Ausführungsform ist mindestens einer Komponenten ein Kontaktelement zum Anschließen einer externen Stromquelle zugeordnet, wobei an der Komponente eine elektrische Verschaltung angeordnet ist, die hardwaremäßig eine Funktion der Komponente deaktiviert.

Die Erfindung wird nachfolgend anhand bevorzugter Ausführungsbeispiele näher erläutert. Die Figuren zeigen:
- Fig. 1: ein elektronisches Türschließsystem in einer ersten Ausführungsform und
- Fig. 2: ein elektronisches Türschließsystem in einer zweiten Ausführungsform.

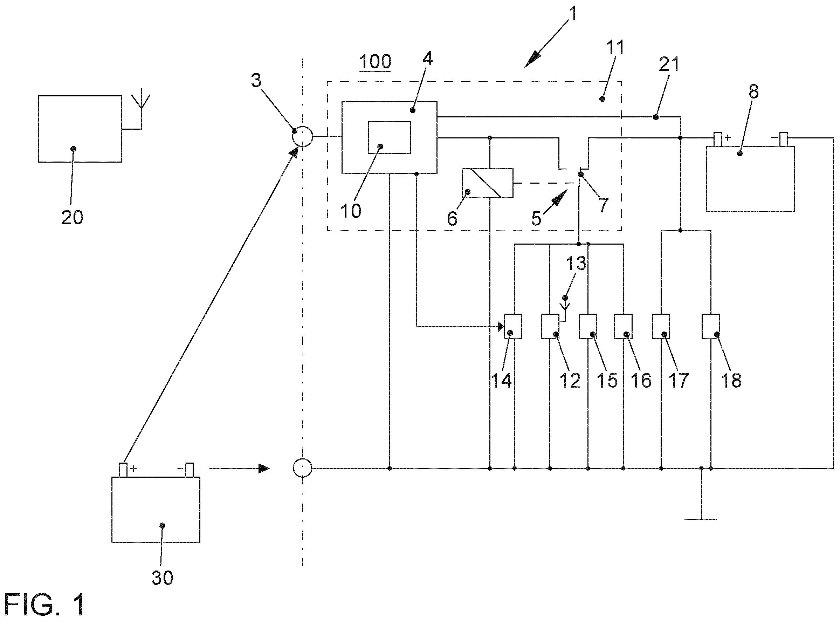

In der Fig. 1 ist ein elektronisches Türschließsystem 1 in einem Kraftfahrzeug 100 dargestellt. Das elektronische Türschließsystem 1 umfasst ein Steuergerät 12 zur elektromechanischen Ver- und Entriegelung mindestens einer Kraftfahrzeugtür, wobei das Steuergerät 12 einen Empfänger 13 für die Sendesignale eines elektronischen Schlüssels 20 aufweist oder ein solcher Empfänger dem Steuergerät 12 zugeordnet ist. Beispielsweise ist ein Bordnetzsteuergerät 14 mit dem Empfänger 13 ausgebildet und übermittelt die Signale an das Steuergerät 12 über einen Fahrzeugbus (z.B. CAN).

Weiter ist mindestens ein von außerhalb des Kraftfahrzeuges 100 zugängliches Kontaktelement 3 vorgesehen, das an eine externe Spannungsquelle 30 anschließbar ist. Das mindestens eine Kontaktelement 3 kann dabei beispielsweise als Steckdose, Buchse oder Leitungsende ausgebildet sein. Mit dem Kontaktelement 3 ist eine Steuereinheit 4 verbunden, die ein Schaltelement 5 bestehend aus einer Spule 6 und einem Wechselschalter 7 ansteuert. Das Schaltelement 5 kann in eine erste Schaltstellung oder eine zweite Schaltstellung geschaltet werden, wobei in der Fig. 1 die erste Schaltstellung dargestellt ist. In der ersten Schaltstellung sind alle Bordnetzverbraucher mit einer Bordnetzbatterie 8 verbunden. Neben dem bereits erwähnten Steuergerät 12 sind dies beispielsweise ein Bordnetzsteuergerät 14, eine elektronische Parkbremse 15 sowie weitere erste Verbraucher 16 , die für eine Ver- und Entriegelung der Kraftfahrzeugtür notwendig sind. Weitere Bordnetzverbraucher sind beispielsweise ein Getriebesteuergerät 17 sowie weitere zweite Verbraucher 18, die für eine Ver- und Entriegelung der Fahrzeugtür nicht notwendig sind.

Im Falle einer Tiefentladung kann die Bordnetzbatterie 8 die Bordnetzverbraucher nicht mehr ausreichend versorgen, aber auch nicht das Steuergerät 12 sowie weitere für die Ver- und Entriegelung notwendige Verbraucher 16. Um nun dennoch Zutritt zum Kraftfahrzeug 100 zu ermöglichen, kann an das mindestens eine Kontaktelement 3 die externe Spannungsquelle 30 angeschlossen werden. Die Steuereinheit 4 erfasst nun eine Spannung an dem Kontaktelement 3 sowie die Spannungslage der Bordnetzbatterie 8 (kleiner als ein Schwellwert) über eine Messleitung 21 und steuert daraufhin das Schaltelement 5 in die zweite Schaltstellung. In der zweiten Schaltstellung sind das Steuergerät 12, das Bordnetzsteuergerät 14, die elektronische Parkbremse 15 sowie die weiteren ersten Verbraucher 16 über die Steuereinheit 4 mit dem Kontaktelement 3 verbunden. Dabei erfolgt die Umschaltung nur, wenn eine ausreichende Spannung an dem Kontaktelement 3 anliegt und gleichzeitig die Spannung der Bordnetzbatterie 8 unterhalb des Schwellwertes liegt. In der Steuereinheit 4 ist eine Schutzvorrichtung 10 angeordnet, die beispielsweise Überspannungen, Überströme, Verpolungen und/oder hochfrequente Störsignale abblockt. Durch die Versorgung der für die Ver- und Entriegelung notwendigen Verbraucher können nun wieder Sendesignale des elektronischen Schlüssels 20 empfangen und ausgewertet werden und nach positivem Ergebnis die Kraftfahrzeugtür entriegelt werden. Der Nutzer kann dann in das Kraftfahrzeug 100 einsteigen und von innen beispielsweise die Motorhaube entriegeln, sodass die Bordnetzbatterie 8 geladen oder eine defekte Bordnetzbatterie 8 getauscht werden kann. Steuereinheit 4 und Schaltelement 5 können als Baueinheit 11 ausgebildet sein und beispielsweise in einen Sicherungskasten eingesteckt werden. Somit lassen sich sehr einfach Kraftfahrzeuge 100 nachrüsten bzw. in der Produktion sehr einfach unterschiedliche Varianten herstellen.

Weiter ist in dem Steuergerät 12 ein Notbestromungs-Algorithmus abgelegt, der beispielsweise die Funktion eines elektrischen Fensterhebers deaktiviert. Hierdurch kann die Zuleitung vom Kontaktelement 3 für geringe Ströme ausgelegt werden. Weiter kann bei Durchführung des Notbestromungs-Algorithmus bei der Verriegelung der Fahrzeugtür auf eine Wählhebelstellung als Eingabe verzichtet werden, die im Normal-Modus vom Getriebesteuergerät 17 geliefert wird. Somit kann die Zuleitung für noch geringere Ströme ausgelegt werden.

Der Zustand des Notbestromungs-Modus kann dabei verschiedenartig detektiert und dem Steuergerät 12 übermittelt werden. Beispielsweise kann die Steuereinheit 4 die Spannung am Kontaktelement 3 erfassen und über eine Signalleitung 19 oder eine Busleitung an das Bordnetzsteuergerät 14 oder das Steuergerät 12 übermitteln. Wird die Information an das Bordnetzsteuergerät 14 übermittelt, so überträgt dieses die Information weiter an das Steuergerät 12. Alternativ oder ergänzend kann eines der bestromten Steuergeräte 12, 14, 15 in der zweiten Schaltstellung anhand der Buskommunikation auf den Notbestromungs-Modus schließen, wenn keine Botschaften von anderen Busteilnehmern empfangen werden. Dabei sei angemerkt, dass die Steuergeräte 14 und 15 nicht zwingend im Notbestromungs-Modus mit Spannung versorgt werden müssen.

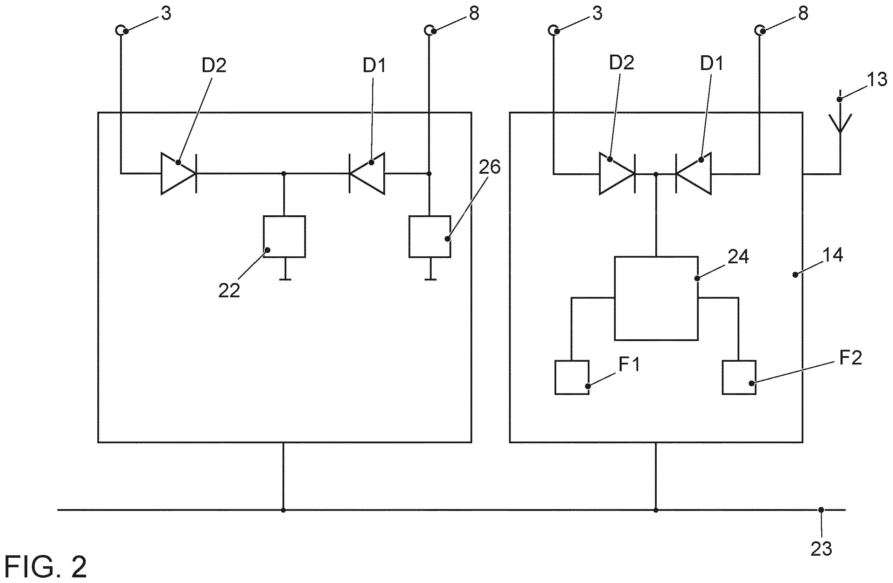

In der Fig. 2 ist eine alternative Ausführungsform dargestellt, wobei nur das Steuergerät 12 und das Bordnetzsteuergerät 14 dargestellt sind. Dabei ist weiter ein erster Motor 26 für eine Fensterheberfunktion und ein weiterer Motor 22 für eine Ver- und Entriegelung der Fahrzeugtür dargestellt. Bei dieser Ausführungsform kann beispielsweise auf das Schaltelement 5 und die Steuereinheit 4 verzichtet werden. Hierzu sind die Spannungseingänge der Steuergeräte 12, 14 über eine erste Diode D1 mit der Bordnetzbatterie 8 und über eine zweite Diode D2 mit dem mindestens einen Kontaktelement 3 verbunden.

Das Bordnetzsteuergerät 14 weist den Empfänger 13 auf. Weiter weist das Bordnetzsteuergerät 14 eine Steuereinheit 24 auf, auf der softwaretechnisch der Notbestromungs- Algorithmus abläuft, sodass beispielsweise eine Funktion F1 durchgeführt wird, jedoch eine Funktion F2 des Normal-Modus im Notbestromungsmodus nicht durchgeführt wird.

Bei Ausfall der Bordnetzbatterie 8 und Anschalten einer ersten externen Spannungsquelle 30 an das Kontaktelement 3 werden die beiden Steuergeräte 12, 14 durch die externe Spannungsquelle 30 versorgt, wobei die beiden gegenpolig verschalteten Dioden D1, D2 die entladene Bordnetzbatterie 8 entkoppeln. Aus der Kommunikation über die Busleitung 23 kann dann das Steuergerät 14 den Notbestromungs-Modus ermitteln und den Notbestromungs-Algorithmus aktivieren, sodass die Funktion F2 deaktiviert wird.

Bei dieser Ausführungsform werden die Funktionen sowohl softwaretechnisch als auch hardwaretechnisch deaktiviert, da der erste Motor 26 für die Fensterheberfunktion durch die erste Diode D1 von dem Kontaktelement 3 entkoppelt ist.

### Bezugszeichenliste

- 1): elektronisches Türschließsystem
- 3): Kontaktelement
- 4): Steuereinheit
- 5): Schaltelement
- 6): Spule
- 7): Wechselschalter
- 8): Bordnetzbatterie
- 10): Schutzvorrichtung
- 11): Baueinheit
- 12): Steuergerät
- 13): Empfänger
- 14): Bordnetzsteuergerät
- 15): elektronische Parkbremse
- 16): weitere erste Verbraucher
- 17): Getriebesteuergerät
- 18): weitere zweite Verbraucher
- 19): Signalleitung
- 20): elektronischer Schlüssel
- 21): Messleitung
- 22): Motor für Ver- und Entriegelung der Fahrzeugtür
- 23): Busleitung
- 24): Steuereinheit
- 26): Motor für Fensterheberfunktion
- 30): externe Spannungsquelle
- 100): Kraftfahrzeug
- D1): erste Diode
- D2): zweite Diode
- F1, F2: Funktion

## Patentansprüche

1. Elektronisches Türschließsystem (1) eines Kraftfahrzeuges (100), umfassend mindestens einen Empfänger für die Sendesignale eines elektronischen Schlüssels (20), mindestens ein Steuergerät (12) zur elektromechanischen Ver- und Entriegelung mindestens einer Kraftfahrzeugtür und/oder mindestens ein weiteres Steuergerät (14, 15), mindestens ein von außerhalb des Kraftfahrzeuges (100) zugängliches Kontaktelement (3) zum Anschließen einer externen Spannungs-quelle (30), wobei das mindestens eine Steuergerät (12) zur elektromechanischen Ver- und Entriegelung mindestens einer Kraftfahrzeugtür und/oder das mindestens eine weitere Steuergerät (14, 15) einen Notbestromungs-Algorithmus aufweist, wobei das elektronische Türschließsystem (1) derart ausgebildet ist, einen Notbestromungs-Modus zu erfassen und den Notbestromungs-Algorithmus zu aktivieren, wobei der Notbestromungs-Algorithmus derart ausgebildet ist, von einer im Notbestromungs-Modus aktivierten Komponente mindestens eine Funktion zu deaktivieren, die in einem Normal-Modus verfügbar ist, und/oder bei einer Funktion im Notbestromungs-Modus auf vorab definierte Daten von deaktivierten Komponenten im Notbestromungs-Modus zuzugreifen oder diese Daten für die Durchführung der Funktion im Notbestromungs-Modus zu ignorieren, wenn die Daten der deaktivierten Komponente zur Durchführung der Funktion in einem Normal-Modus benötigt werden, wobei
das elektronische Türschließsystem (1) mindestens ein Schaltelement (5) und eine Steuereinheit (4) aufweist, die mit dem Kontaktelement (3) und einer Bordnetzbatterie (8) verbunden ist, wobei die Steuereinheit (4) derart ausgebildet ist, in Abhängigkeit der Spannungslage an dem Kontaktelement (3) und der Bordnetzbatterie (8) das Schaltelement (5) in eine erste Schaltstellung oder eine zweite Schaltstellung zu schalten, wobei in der ersten Schaltstellung das Kontaktelement (3) von dem elektrischen Bordnetz des Kraftfahrzeuges (100) entkoppelt ist und in der zweiten Schaltstellung mindestens die für die Ver- und Entriegelung notwendigen elektrischen Bordnetzverbraucher mit dem Kontaktelement (3) verbunden und von der Bordnetzbatterie (8) entkoppelt werden.

2. Elektronisches Türschließsystem nach Anspruch 1, **dadurch gekennzeichnet, dass** das elektronische Türschließsystem (1) derart ausgebildet ist, eine Spannung an dem mindestens einen Kontaktelement (3) zu erfassen und ein Aktivierungssignal für den Notbestromungs-Algorithmus zu erzeugen.

3. Elektronisches Türschließsystem nach einem der vorangegangenen Ansprüche,
**dadurch gekennzeichnet, dass** mindestens ein Steuergerät (12, 14, 15) derart ausgebildet ist, anhand einer Buskommunikation auf einen Notbestromungs-Modus zu schließen und den mindestens einen Notbestromungs-Algorithmus zu aktivieren.

4. Elektronisches Türschließsystem nach einem der vorangegangen Ansprüche, **dadurch gekennzeichnet, dass** die deaktivierte Funktion eine elektrische Fensterheber-Funktion ist.

5. Elektronisches Türschließsystem nach einem der vorangegangen Ansprüche, **dadurch gekennzeichnet, dass** die deaktivierte Komponente ein Getriebesteuergerät (17) ist.

6. Elektronisches Türschließsystem nach einem der vorangegangenen Ansprüche,
**dadurch gekennzeichnet, dass** das elektronische Türschließsystem (1) derart ausgebildet ist, dass nur die für die Ver- und Entriegelung notwendigen Bordnetzverbraucher (12, 14, 15) sowie die Bordnetzverbraucher einer elektronischen Parkbremse (15) mit dem Kontaktelement (3) verbunden werden.

7. Elektronisches Türschließsystem nach einem der vorangegangenen Ansprüche,
**dadurch gekennzeichnet, dass** die Steuereinheit (4) derart ausgebildet ist, eine für das Bordnetz ungeeignete Spannungslage zu blocken oder zu transformieren.

8. Elektronisches Türschließsystem nach einem der vorangegangen Ansprüche, **dadurch gekennzeichnet, dass** mindestens einer Komponente ein Kontaktelement (3) zum Anschließen einer externen Spannungsquelle (30) zugeordnet ist, wobei an der Komponente eine elektrische Verschaltung angeordnet ist, die hardwaremäßig eine Funktion der Komponente deaktiviert.

## Claims

1. Electronic door locking system (1) of a motor vehicle (100), comprising at least one receiver for the transmission signals of an electronic key (20), at least one controller (12) for electromechanically locking and unlocking at least one motor vehicle door and/or at least one further controller (14, 15), at least one contact element (3), accessible from outside the motor vehicle (100), for connecting an external voltage source (30), wherein the at least one controller (12) for electromechanically locking and unlocking at least one motor vehicle door and/or the at least one further controller (14, 15) has an emergency power supply algorithm, wherein the electronic door locking system (1) is designed to detect an emergency power supply mode and to activate the emergency power supply algorithm, wherein the emergency power supply algorithm is designed to deactivate at least one function of a component which is activated in the emergency power supply mode and available in a normal mode, and/or, in the case of a function in the emergency power supply mode, to access predefined data from deactivated components in the emergency power supply mode or to ignore these data for the performance of the function in the emergency power supply mode when the data from the deactivated component are required for the performance of the function in a normal mode, wherein
the electronic door locking system (1) has at least one switching element (5) and a control unit (4) which is connected to the contact element (3) and an on-board battery (8), wherein the control unit (4) is designed to switch the switching element (5) into a first switching position or a second switching position on the basis of the voltage level at the contact element (3) and the on-board battery (8), wherein, in the first switching position, the contact element (3) is decoupled from the on-board electrical network of the motor vehicle (100) and, in the second switching position, at least the electrical on-board consumers which are necessary for locking and unlocking are connected to the contact element (3) and decoupled from the on-board battery (8).

2. Electronic door locking system according to claim 1, **characterized in that** the electronic door locking system (1) is designed to detect a voltage at the at least one contact element (3) and to generate an activation signal for the emergency power supply algorithm.

3. Electronic door locking system according to either of the preceding claims, **characterized in that** at least one controller (12, 14, 15) is designed to deduce an emergency power supply mode via bus communication and to activate the at least one emergency power supply algorithm.

4. Electronic door locking system according to any of the preceding claims, **characterized in that** the deactivated function is a power window function.

5. Electronic door locking system according to any of the preceding claims, **characterized in that** the deactivated component is a transmission controller (17).

6. Electronic door locking system according to any of the preceding claims, **characterized in that** the electronic door locking system (1) is designed such that only the on-board consumers (12, 14, 15) which are necessary for locking and unlocking and the on-board consumers of an electronic parking brake (15) are connected to the contact element (3).

7. Electronic door locking system according to any of the preceding claims, **characterized in that** the control unit (4) is designed to block or transform a voltage level which is unsuitable for the on-board electrical network.

8. Electronic door locking system according to any of the preceding claims, **characterized in that** at least one component is associated with a contact element (3) for connecting an external voltage source (30), an electrical circuit which deactivates a function of the component in terms of hardware being arranged on the component.

## Revendications

1. Système électronique de fermeture de porte (1) d'un véhicule automobile (100), comprenant au moins un récepteur pour les signaux d'émission d'une clé électronique (20), au moins un appareil de commande (12) pour le verrouillage et le déverrouillage électromécaniques d'au moins une porte de véhicule automobile et/ou au moins un autre appareil de commande (14, 15), au moins un élément de contact (3) accessible depuis l'extérieur du véhicule automobile (100) pour la connexion d'une source de tension externe (30), dans lequel l'au moins un appareil de commande (12) pour le verrouillage et le déverrouillage électromécaniques d'au moins une porte de véhicule automobile et/ou l'au moins un autre appareil de commande (14, 15) présente un algorithme d'alimentation électrique de secours, dans lequel le système électronique de fermeture de porte (1) est configuré de manière à détecter un mode d'alimentation électrique de secours et à activer l'algorithme d'alimentation électrique de secours, dans lequel l'algorithme d'alimentation électrique de secours est configuré de manière à désactiver au moins une fonction d'un composant activé dans le mode d'alimentation électrique de secours, laquelle fonction est disponible dans un mode normal, et/ou, dans le cas d'une fonction en mode d'alimentation électrique de secours, à accéder à des données prédéfinies de composants désactivés en mode d'alimentation électrique de secours ou d'ignorer lesdites données pour la mise en œuvre de la fonction en mode d'alimentation électrique de secours si les données du composant désactivé sont nécessaires pour la mise en œuvre de la fonction dans un mode normal, dans lequel
le système électronique de fermeture de porte (1) présente au moins un élément de commutation (5) et une unité de commande (4) qui est reliée à l'élément de contact (3) et à une batterie de réseau de bord (8), dans lequel l'unité de commande (4) est configurée de manière à commuter l'élément de commutation (5) dans une première position de commutation ou dans une seconde position de commutation en fonction de la valeur de tension au niveau de l'élément de contact (3) et de la batterie de réseau de bord (8), dans lequel, dans la première position de commutation, l'élément de contact (3) est découplé du réseau de bord électrique du véhicule automobile (100) et, dans la seconde position de commutation, au moins les consommateurs de réseau de bord électriques nécessaires pour le verrouillage et le déverrouillage sont connectés à l'élément de contact (3) et sont découplés de la batterie de réseau de bord (8).

2. Système électronique de fermeture de porte selon la revendication 1, **caractérisé en ce que** le système électronique de fermeture de porte (1) est configuré de manière à détecter une tension au niveau de l'au moins un élément de contact (3) et à générer un signal d'activation pour l'algorithme d'alimentation électrique de secours.

3. Système électronique de fermeture de porte selon l'une des revendications précédentes, **caractérisé en ce qu'au** moins un appareil de commande (12, 14, 15) est configuré de manière à déceler un mode d'alimentation électrique de secours à l'aide d'une communication par bus et à activer l'au moins un algorithme d'alimentation électrique de secours.

4. Système électronique de fermeture de porte selon l'une des revendications précédentes, **caractérisé en ce que** la fonction désactivée est une fonction de lève-vitre électrique.

5. Système électronique de fermeture de porte selon l'une des revendications précédentes, **caractérisé en ce que** le composant désactivé est un appareil de commande de transmission (17).

6. Système électronique de fermeture de porte selon l'une des revendications précédentes, **caractérisé en ce que** le système électronique de fermeture de porte (1) est configuré de manière à relier uniquement les consommateurs de réseau de bord (12, 14, 15) nécessaires pour le verrouillage et le déverrouillage ainsi que les consommateurs de réseau de bord d'un frein de stationnement électronique (15) à l'élément de contact (3).

7. Système électronique de fermeture de porte selon l'une des revendications précédentes, **caractérisé en ce que** l'unité de commande (4) est configurée de manière à bloquer ou à transformer une valeur de tension inappropriée pour le réseau de bord.

8. Système électronique de fermeture de porte selon l'une des revendications précédentes, **caractérisé en ce qu'un** élément de contact (3) est associé à au moins un composant pour la connexion d'une source de tension externe (30), dans lequel une interconnexion électrique est disposée sur le composant, laquelle désactive matériellement une fonction du composant.
